Europäisches Patentamt

European Patent Office

Office européen des brevets

(19)

(11) Numéro de publication : **0 140 745**
**B1**

(12) **FASCICULE DE BREVET EUROPÉEN**

(45) Date de publication du fascicule du brevet :
08.07.87

(51) Int. Cl.⁴ : **C 03 B 5/027**, H 05 B 3/00

(21) Numéro de dépôt : **84401845.7**

(22) Date de dépôt : **18.09.84**

(54) Perfectionnements aux techiques de fusion électrique du verre.

(30) Priorité : **20.09.83 FR 8314903**

(43) Date de publication de la demande :
**08.05.85 Bulletin 85/19**

(45) Mention de la délivrance du brevet :
**08.07.87 Bulletin 87/28**

(84) Etats contractants désignés :
**AT BE CH DE FR GB IT LI LU NL SE**

(56) Documents cités :
**BE-A- 877 978**
**FR-A- 2 275 409**
**US-A- 3 683 093**

(73) Titulaire : **SAINT-GOBAIN RECHERCHE**
**39 quai Lucien Lefranc**
**F-93300 Aubervilliers (FR)**

(72) Inventeur : **Martin, Bernard**
**57 rue Paul Vaillant Couturier**
**F-92300 Levallois-Perret (FR)**
Inventeur : **Dossier, Gérard**
**2 allée des Bouvreuils**
**F-77330 Lesigny (FR)**

(74) Mandataire : **Le Vaguerese, Sylvain Jacques**
**SAINT-GOBAIN RECHERCHE 39, quai Lucien Lefranc**
**F-93304 Aubervilliers Cedex (FR)**

## Description

L'invention est relative aux techniques de fusion du verre, et plus particulièrement celles dans lesquelles la conductivité du verre fondu est utilisée pour développer l'énergie nécessaire à la fusion au sein même du verre fondu.

De façon plus précise, l'invention concerne les techniques de fusion électrique dans lesquelles le courant est conduit dans le bain de verre fondu par des électrodes disposées verticalement sur la sole du four de fusion et étant alimentées en courant triphasé (FR-A-2 275 409 et aussi US-A-3 683 093).

L'énergie électrique est utilisée à des fins très variées dans les techniques se rapportant à la fusion ou à l'affinage du verre. Dans de nombreux cas cette utilisation est relativement limitée. Il s'agit, par exemple, de réchauffer localement le bain de verre fondu pour favoriser certains mouvements de convection ou pour éliminer des bulles, ou encore pour améliorer l'homogénéité de la température dans des bains très étendus.

En dehors de ces cas très spécifiques, l'utilisation de l'énergie électrique pour la fusion proprement dite est souvent restée tributaire des techniques plus anciennes dans lesquelles la fusion est conduite au moyen de brûleurs. Ceci est d'autant plus sensible que la capacité de production est plus élevée.

En effet, en dépit des nombreux facteurs difficiles à maîtriser, l'expérience des fours à brûleurs a permis d'aboutir à des conditions de marche satisfaisantes pour ce qui concerne la qualité des produits obtenus. Le développement des techniques de fusion électrique s'est fait en essayant, pour l'essentiel, de reproduire ces conditions même si cela ne permettait pas de tirer profit des particularités de ce nouveau mode de chauffage des fours.

Les fours de grande capacité chauffés par des brûleurs sont habituellement longs et de faible profondeur. La charge de matières premières est introduite à une extrémité du four et le verre fondu est évacué à l'autre extrémité. L'épaisseur de la charge sur le bain, qui varie au fur et à mesure que la fusion s'opère, est en moyenne relativement faible. La température est très inégale selon la zone du bain considérée : faible près de la sole et vers l'extrémité d'introduction de la charge, élevée en surface et à l'autre extrémité.

Le choix de la fusion électrique modifie sensiblement ces conditions qui d'une manière ou d'une autre sont liées à l'utilisation de brûleurs et au mode d'échange thermique que ceux-ci imposent.

D'une certaine façon dans les fours de fusion électrique à électrodes verticales, la charge de matière première s'incorpore au bain de verre fondu sans déplacement horizontal à la surface de ce dernier et toute la surface peut être couverte par la charge. Dans ce cas, et à condition que toute la surface participe effectivement aux échanges entre le bain et la charge surnageante, la superficie du four électrique peut être sensiblement réduite par rapport à celle du four de même capacité chauffé par des brûleurs.

L'invention est relative à ce type de fours dans lesquels la surface est couverte par la charge de matière première, fours que l'on nomme aussi « fours à voûte froide ».

Pour obtenir le meilleur rendement possible de ce type de fours, il est apparu aux inventeurs qu'un facteur particulièrement important était d'obtenir une introduction d'énergie bien uniformément répartie dans tout le bain fondu. Un des objets de l'invention est d'améliorer cette répartition ce qui permet notamment, pour une même production, de réduire les dimensions des fours, de faire donc une économie de matériaux réfractaires mais aussi de diminuer les pertes thermiques et donc de réduire les coûts de production.

Si la nécessité d'avoir un bain uniformément chauffé apparaît dans la littérature antérieure, elle reste subordonnée aux conditions très particulières de mise en œuvre de ce chauffage.

La disposition des électrodes sur la sole du four doit répondre en effet à différentes conditions qui pour certaines sont contraires. Ainsi, la conductivité du verre fondu impose un minimum de distance entre les électrodes pour que la puissance nécessaire soit atteinte pour des densités de courant acceptables en pratique à la surface des électrodes. Un rapprochement des électrodes équivaut à une diminution de la résistance et pour une tension donnée à un accroissement de l'intensité du courant. Pour cette raison, le nombre des électrodes (ou groupes d'électrodes) qui peuvent être disposées sur une surface de sole donnée est limité même si cela doit se faire au détriment d'une meilleure répartition des zones du bain qui agissent à la manière de sources de chaleur.

De la même façon, si industriellement il est économique d'utiliser un courant triphasé, en pratique la recherche de l'équilibre des phases semblait imposer une disposition triangulaire ou hexagonale des électrodes peu compatible avec leur distribution uniforme dans des fours rectangulaires.

L'invention concerne une technique de fusion électrique au moyen de courant triphasé utilisant un four sur la sole duquel les électrodes sont réparties de façon régulière sur toute la surface de la sole en au moins un ensemble ordonné comprenant deux rangées de trois électrodes équidistantes, chacune de celles-ci étant alimentée sur une des trois phases désignées R, S et T, l'ordre des phases des électrodes dans les deux rangées étant inversé (R, S, T et T, S, R) de sorte que les deux électrodes médianes sont en phase et les électrodes extrêmes sont sur des phases différentes, la distance séparant deux électrodes d'une même rangée étant à peu près égale à la distance séparant les deux rangées.

Dans un mode de réalisation préféré, les électrodes sont en nombre pair de rangées de trois électrodes formant les ensembles ordonnés (R, S, T ; T, S, R) la disposition des ensembles étant telle que les électrodes de deux rangées voisines de deux ensembles voisins soient dans le même ordre (R, S, T ; R, S, T).

Lorsque le four selon l'invention comporte trois rangées d'électrodes, l'ordre des phases des électrodes des rangées voisines est R, S, T ; T, S, R ; R, S, T.

Pour un nombre impair de rangées supérieur à trois, la disposition préférée est celle des ensembles à nombre pair avec en plus une rangée médiane dont l'ordre des phases est inversé par rapport à celui des deux rangées voisines.

De préférence dans les fours selon l'invention, la distance entre deux rangées de deux ensembles ordonnés voisins est égale à la distance séparant les rangées du même ensemble.

La disposition qui vient d'être décrite correspond à la formation de fours dans lesquels les rangées d'électrodes peuvent être aussi nombreuses que la capacité de production envisagée le nécessite. Pour les raisons indiquées précédemment, il est cependant préférable de faire en sorte que le four utilisé n'ait pas une longueur très supérieure à sa largeur. Pour les très grosses productions, il apparaît ainsi préférable de ne pas trop accroître le nombre de rangées mises côte à côte mais de prolonger les rangées par de nouvelles séries de trois électrodes.

Dans ce cas pour bien conserver les équilibres de phases, il est préférable de limiter les échanges entre les séries de trois électrodes d'une même rangée en faisant en sorte que l'ordre des phases des électrodes s'inverse pour chaque série de trois électrodes (R, S, T ; T, S, R ; R, S, T ; ...).

De façon particulièrement avantageuse, le nombre d'ensembles ordonnés est avantageusement 1, 2, 4, 6, 8 ou 9. Des nombres plus grands sont également envisageables mais correspondent dans les conditions de traitement considérées à des productions qui dépassent largement celles utilisées dans la pratique.

En disposant les électrodes de la façon décrite précédemment, les inventeurs ont constaté de façon surprenante que l'équilibre des phases pouvait être maintenu de façon très satisfaisante. Il est ainsi possible que cet équilibre soit assuré à 95 % ou plus.

Indépendamment de ce qui précède, l'invention se distingue aussi par le fait que les électrodes sont relativement proches les unes des autres compte tenu de la surface du four.

La distance d considérée ici est celle qui sépare les électrodes entre lesquelles s'établissent les courants. Dans un assemblage complexe d'électrodes, il suffit de considérer les électrodes échangeantes les plus voisines.

La notion de distance est directement liée à celle de la puissance disponible. Pour une tension disponible donnée, la puissance est inversement proportionnelle à la résistance du bain qui dépend de la distance séparant les électrodes.

Dans la mesure où la puissance dissipée par chaque électrode (ou groupes d'électrodes) est sensiblement la même (ce qui est lié à l'équilibrage des phases dont il a été question plus haut) dans tout le bain, il est possible de considérer que chaque électrode participe au chauffage d'une fraction de ce bain. Si S est la surface totale du bain cette fraction correspond à une partie du bain dont la surface est S/n, n étant le nombre d'électrodes (ou de groupes d'électrodes) pour l'ensemble du four.

L'introduction d'énergie est d'autant plus homogène que d'une part, la fraction de surface du four chauffée par chaque électrode est aussi petite que possible, et d'autre part, que la distance entre les électrodes échangeantes est aussi grande que possible.

Pour exprimer l'ensemble de ces deux tendances contradictoires il est commode de considérer l'expression $n \cdot d^2/S$.

Selon l'invention (d étant en m et S en m²), ce rapport est avantageusement compris entre 0,4 et 1,4 et de préférence, notamment pour les fours de grande capacité entre 0,6 et 1,25.

Les avantages de la disposition des électrodes selon la technique de l'invention peuvent aussi s'exprimer en considérant d'autres paramètres mais qui tous aboutissent à cette amélioration de l'homogénéité du bain.

Ainsi l'étude expérimentale montre que l'énergie dissipée par effet Joule se localise essentiellement à proximité de l'électrode. Les 4/5èmes de l'énergie se développent dans une zone entourant l'électrode que de façon simplifiée on peut considérer comme homogène. Pour une électrode cylindrique verticale, cette zone correspond approximativement à un cylindre dont le diamètre est 3 fois celui de l'électrode. En rapprochant les électrodes les unes des autres on conçoit que, toutes proportions gardées, ces zones source de chaleur occupent une fraction du bain plus importante et que la fusion pourra être obtenue avec un niveau thermique moyen plus faible.

Ces améliorations se traduisent dans les conditions de marche.

Le fait de disposer d'une puissance accrue par unité de surface du four permet, par exemple, une production par unité de surface sensiblement plus élevée qu'avec les fours analogues antérieurs. Des capacités de $4 \times 10^3$ kg/m² par jour sont aisément atteintes. Cette capacité selon les cas peut être encore plus élevée et dépasser $6 \times 10^3$ kg/m².

A ce propos il faut souligner que la capacité de production rapportée à l'unité de surface n'est significative que pour des conditions de marche analogues, notamment pour des températures de travail identiques. Nous verrons ci-après de façon plus détaillée quelles sont les particularités de l'invention à propos des températures. En effet un accroissement de la température de travail permet de façon générale d'augmenter la production. Une telle opération n'est cependant pas toujours souhaitable pour de nombreuses raisons. Parmi ces raisons figurent notamment la longévité des réfractaires du four et des électrodes. Un même four porté à température plus élevée aura une durée de vie, exprimée en tonnage total produit, plus courte que s'il fonctionne à température plus basse. Une autre raison est que la consommation énergétique spécifique croît avec la température de travail.

Il est donc possible selon l'invention de construire des fours de faible encombrement pour une forte capacité de production.

Il est encore plus remarquable de constater que les fours selon l'invention permettent une grande latitude dans le fonctionnement. En effet s'il est avantageux de pouvoir disposer d'une capacité de production importante, il est aussi avantageux de pouvoir faire marcher le four au ralenti lorsque cela est nécessaire. De ce point de vue les fours selon l'invention se distinguent des fours antérieurs. Une réduction au sixième de la production la plus élevée, ou même une réduction encore plus grande, est réalisable sans risques.

Cette souplesse d'utilisation est due au moins en partie à la meilleure répartition des sources de chaleur à l'intérieur du verre fondu, répartition qui se traduit par une très grande homogénéité des températures en tout point, et ceci quelle que soit la température moyenne à laquelle on se situe.

Le resserrement des écarts de température dans le bain permet en effet de diminuer la température moyenne la plus basse et par suite de réduire la vitesse de fusion de la charge, donc la production du four.

Dans la pratique également, tout ce qui permet de réduire les pertes thermiques du bain fondu favorise une limitation des écarts de température et par conséquent permet encore de réduire la production « ralentie ».

Un accroissement de l'épaisseur de la charge sans diminution du volume de matériau fondu, favorise donc ce régime de fonctionnement.

De façon plus générale, toutes conditions égales par ailleurs, notamment même production et même charge de matériaux verriers, la température moyenne du bain peut être plus basse de quelques degrés voire de quelques dizaines de degrés par rapport aux techniques antérieures.

De ceci, il résulte que les pertes thermiques sont moindres de même que la dépense énergétique spécifique. Cette diminution peut atteindre jusqu'à 8 % et se situe le plus couramment aux alentours de 4 à 5 %.

Pour améliorer encore les performances des fours selon l'invention d'autres dispositions sont également favorables.

Pour limiter les densités de courant sur les électrodes, il est souhaitable que celles-ci présentent une surface de contact avec le verre suffisamment grande. La longueur des électrodes étant limitée, comme nous le verrons plus loin, de même que leur diamètre pour des raisons pratiques, il est avantageux lorsque des intensités importantes sont mises en jeu de remplacer une électrode unique par un groupe de plusieurs électrodes (deux ou trois le plus souvent).

Lorsque l'électrode unique est remplacée par un tel groupe, la distance séparant ces électrodes n'est de préférence pas grande par rapport à celle qui sépare ce groupe des groupes les plus proches avec lesquels se font les échanges. De préférence, l'entraxe pour des électrodes d'un même groupe n'est pas inférieur à deux fois le diamètre de ces électrodes et pas supérieur à huit fois ce même diamètre, et de préférence pas supérieur à six fois.

La réduction de la densité de courant à la surface des électrodes conduit à une diminution de la température de la surface de l'électrode ce qui permet de réduire son érosion au contact du verre. De même, pour une même quantité d'énergie fournie au verre fondu, la température de celui-ci est localement moins élevée.

Pour éviter les problèmes de corrosion du réfractaire de la sole, chaque électrode ou groupe d'électrodes est de préférence disposé sur un socle en saillie sur la sole du four. On évite ainsi d'accentuer les mouvement locaux de convection à la base de l'électrode, mouvements qui ont pour conséquence d'attaquer le réfractaire de la sole. Le réfractaire du socle est avantageusement plus résistant à l'érosion que celui constituant la sole du four.

L'extrémité supérieure de l'électrode étant éloignée de la surface de contact verre fondu-charge, on évite aussi de développer une fusion ponctuelle accrue à la verticale de l'électrode, fusion favorisée par une température localement plus élevée. En effet les mouvements de convection sont particulièrement intenses le long de l'électrode en raison du gradient de température existant avec le bain avoisinant. Lorsque l'extrémité de l'électrode se trouve suffisamment profondément immergée, le courant de verre ascendant qui prend naissance le long de l'électrode induit sur la fraction du trajet séparant l'extrémité de l'électrode de la limite du bain fondu, une quantité de verre avoisinant suffisante à la fois pour réduire l'écart de température et pour accroître la surface de charge directement longée par ce courant. La zone de fusion privilégiée qui se situe à la verticale de l'électrode est alors relativement large. Dans le cas contraire, c'est-à-dire lorsque l'extrémité de l'électrode est proche de la limite du bain et de la couche de charge, la fusion s'effectue rapidement sur une petite surface. Il se forme alors, dans la couche de charge, des cratères qui peuvent, lorsque cette couche n'est pas très épaisse, parvenir à la percer. Un tel mécanisme est défavorable. En plus de l'irrégularité dans la fusion, l'isolation que crée la couche superficielle est rompue et la perte énergétique qui en résulte peut être très sensible.

L'extrémité de l'électrode est donc avantageusement située à une distance suffisante pour que la température du courant de convection au niveau de la surface ne soit pas trop élevée par rapport à la température moyenne sur toute la surface.

En pratique, il est avantageux de faire en sorte que la distance séparant l'extrémité de l'électrode de la surface séparant le verre de la couche de matières vitrifiables en cours de transformation soit au moins le dixième de la hauteur du verre.

Bien entendu le niveau du verre fondu peut varier en fonction des conditions de marche (par exemple pour accroître la production, la température est accrue et le niveau du verre dans le four baisse). Il faut donc se baser sur le niveau le plus bas pour déterminer la longueur de l'électrode.

Dans la suite de la description, l'invention est décrite de façon plus détaillée en faisant référence aux planches de dessins dans lesquelles :

les figures 1a et 1b sont des schémas de four électrique de type traditionnel, respectivement en vue de dessus et en coupe longitudinale, montrant la disposition des électrodes et l'évolution des matières premières introduites à une extrémité,

la figure 2 est un schéma, en vue de dessus, d'un four électrique également traditionnel dans lequel la charge est introduite uniformément sur toute sa surface,

les figures 3a à 3e présentent, en vue de dessus, des dispositions typiques d'électrodes dans un four électrique selon l'invention,

la figure 4 montre, en coupe schématique, le type de mouvements de convection verticaux qui animent le bain dans les fours selon l'invention,

la figure 5 est un schéma, en vue de dessus, de disposition de groupes d'électrodes doubles dans un four selon l'invention.

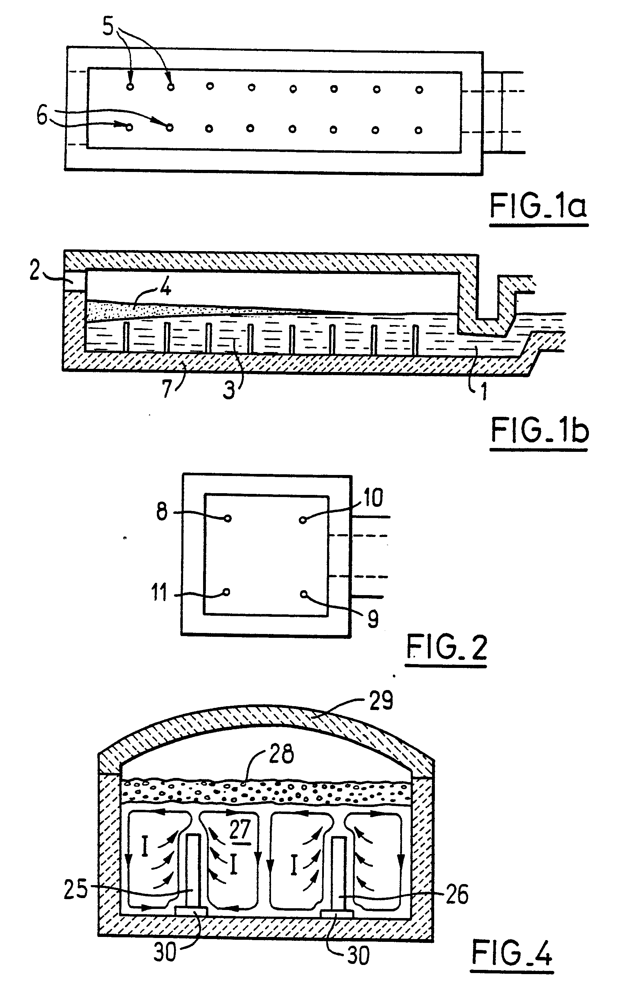

Les figures 1a et 1b présentent dans leur ensemble l'organisation des fours de grande capacité adaptés des fours antérieurs chauffés par brûleurs.

Ces fours se distinguent notamment par une forme très allongée. La longueur du bassin de fusion est habituellement plus de trois fois sa largeur.

Cette configuration est choisie pour favoriser une progression du bain qui, globalement, correspond à une modification de sa qualité de telle sorte que le verre extrait au niveau de la goulotte immergée 1 présente une bonne homogénéité.

Dans de tels fours, l'introduction de la charge de matières vitrifiables est effectuée par l'ouverture 2 située à une extrémité du four. Cette charge se dépose sur le bain fondu 3 et forme une couche 4. L'épaisseur de cette couche va en diminuant depuis l'ouverture d'introduction par suite de la fusion progressive des matériaux qui la constituent. Cette couche peut se prolonger jusqu'à l'extrémité du four du côté de laquelle se situe la gorge 1. Le fait que cette dernière soit immergée évite ainsi le passage des matériaux qui arrivés à cette extrémité n'auraient pas encore fondu.

Pour ce genre de four, le chauffage électrique établit des conditions analogues à celles obtenues dans les fours à brûleurs. Sur le modèle représenté aux figures 1a et 1b, des électrodes 5, 6 sont disposées régulièrement sur la sole 7 du four. Ces électrodes associées deux à deux de chaque côté du four sont alimentées, par exemple, en courant monophasé. Le réglage de l'alimentation de chaque paire d'électrodes 5, 6 peut se faire séparément de façon à faire varier les conditions de température en fonction de la zone du four considérée.

De façon générale, ces fours sont relativement encombrants et leur consommation énergétique élevée.

La figure 2 présente un four de fusion électrique de forme carrée, four qui permet de réduire les pertes thermiques par les parois. Dans ce type de four, ordinairement de dimensions plus petites que celles du four des figures 1a et 1b, la charge de matières premières est normalement répandue uniformément à la surface du bain fondu, et l'on s'efforce également de faire en sorte que la température du bain, notamment au contact de la couche de matières premières, soit telle que la fusion de cette couche soit également uniforme sur toute la surface offerte. Pour cette raison, les électrodes 8, 9, 10, 11 sont disposées de façon symétrique et l'alimentation électrique (par courant mono ou diphasé) est telle que la puissance soit dissipée de façon égale par chaque électrode.

Dans ce mode proposé antérieurement, les électrodes sont cependant relativement éloignées les unes des autres, l'uniformité du chauffage du bain n'est pas entièrement satisfaisante et la consommation spécifique n'est pas optimisée.

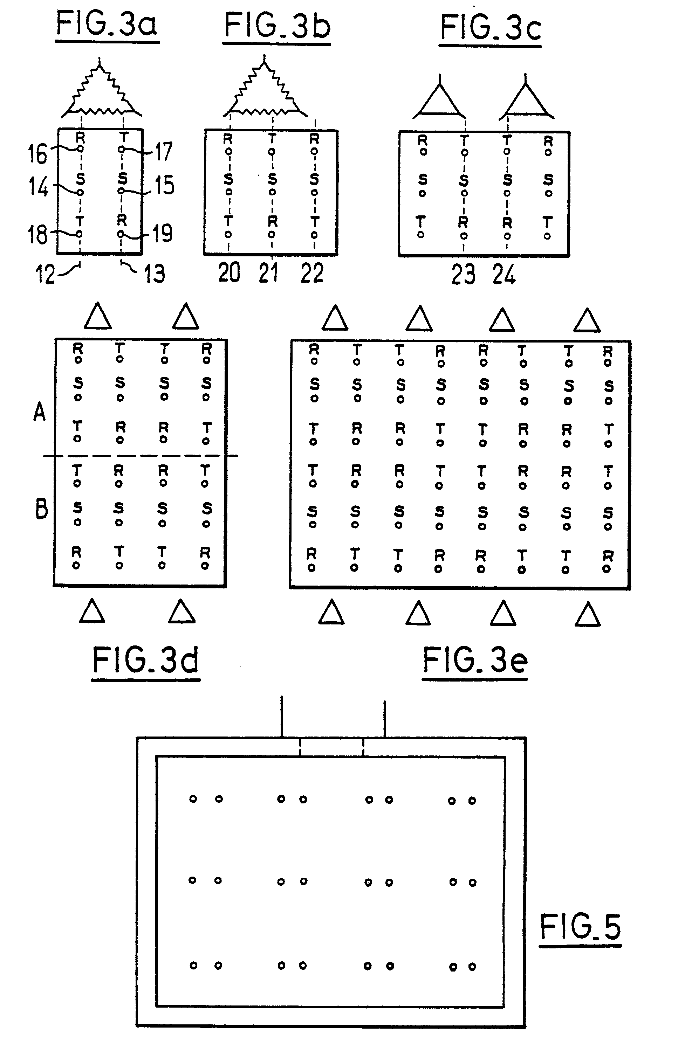

Les figures 3a à 3e représentent des dispositions typiques d'électrodes dans des fours de fusion électrique selon l'invention.

Pour des raisons de simplicité sur ces figures ne sont représentées que les limites du bain fondu et l'implantation des électrodes sur la sole du four. Les connexions avec l'alimentation triphasée sont indiquées en reportant pour toutes les électrodes en phase le même symbole R, S ou T.

La figure 3a représente le plus petit ensemble correspondant à l'invention. Dans cette disposition six électrodes sont groupées en deux rangées 12 et 13. Les trois électrodes d'une rangée sont alimentées sur chacune des phases. Les deux électrodes médianes 14 et 15 sont en phase. Les électrodes extrêmes voisines des deux rangées 16, 17 et 18, 19 sont sur des phases différentes.

Dans les modes préférés représentés, les distances séparant deux électrodes d'une même rangée sont toutes égales et cette distance est la même que celle séparant les deux rangées.

Dans un four présentant cette configuration, les échanges principaux entre électrodes se font bien entendu entre électrodes les plus proches. L'électrode 16 échange avec les électrodes 14, 17 à un degré moindre avec l'électrode 15. L'électrode 14 échange avec les électrodes 16, 18 et un peu moins avec les électrodes 17 et 19 et ainsi de suite.

Il est remarquable et l'expérience montre que bien que les électrodes ne soient pas disposées en triangle ni au sommet d'un hexagone régulier, l'intensité sur chaque phase et la dissipation énergétique autour de chaque électrode sont très bien équilibrées. L'écart ne dépasse pas 5 % et peut être inférieur à 3 %. Autrement dit, les électrodes étant réparties uniformément sur la sole, le chauffage du bain est également uniforme. Une telle disposition se prête donc bien à la fusion d'une charge déposée sur la totalité de la surface.

Dans un four présentant cette disposition, la sortie du verre fondu peut être indifféremment prévue sur l'une quelconque des faces. De préférence la gorge est placée suivant un axe de symétrie du bassin.

La figure 3b présente une disposition analogue à la précédente comportant trois rangées d'électrodes 20, 21 et 22. Les deux premières rangées sont alimentées de façon identique à celle de la figure 3a. La troisième rangée 22 est alimentée comme la rangée 20.

Cette disposition, bien que l'on soit plus proche d'une forme compacte, se montre moins bien équilibrée que la précédente. Néanmoins l'écart des intensités sur chaque phase ne dépasse pas ordinairement 5 %.

La figure 3c présente une disposition comprenant quatre rangées qui équivaut au doublement de celle de la figure 3a en disposant les rangées deux par deux de façon symétrique de telle sorte que les électrodes de chacune des rangées 23 et 24 présentent côte à côte des électrodes en phase. Dans cette disposition chaque moitié est pratiquement indépendante de l'autre en particulier lorsque, comme cela est indiqué, chaque moitié de four est alimentée par un transformateur. Les échanges entre ces moitiés sont très limités. L'ensemble reste très bien équilibré.

Les figures 3d et 3e présentent des ensembles comprenant un nombre encore plus grand d'électrodes. Dans ces figures les rangées sont le double des précédentes, chacune comportant six électrodes. La disposition des phases sur une même rangée est symétrique de façon comme précédemment à ce que chaque moitié A et B fonctionne pratiquement de façon indépendante.

A la figure 5, la disposition représentée est analogue à celle de la figure 3c. Dans ce cas les électrodes individuelles sont remplacées par des groupes de deux électrodes. Les électrodes d'un même groupe sont suffisamment proches l'une de l'autre pour jouer pratiquement le rôle d'une électrode unique vis-à-vis des autres groupes d'électrodes.

Sur les figures 3 et 5, des transformateurs d'alimentation triphasée sont schématisés par des petits triangles. Ces triangles sont disposés en regard de groupes d'électrodes. Ces schémas d'alimentation sont préférés, mais d'autres schémas sont également possibles, notamment suivant la puissance des transformateurs utilisés.

La figure 4 illustre le comportement du bain fondu chauffé par des électrodes verticales. Le four est représenté en section au niveau de deux électrodes 25, 26.

Sur cette figure le bain de verre fondu 27 est recouvert d'une couche 28 de matières vitrifiables. Cette couche est complétée en permanence, de façon traditionnelle, par un système de distribution mobile alimentant la totalité de la surface suivant un trajet répétitif complexe. Ce dispositif n'est pas représenté.

L'espace séparant la couche de matière 28 de la voûte 29 du four peut être relativement restreint. Il doit néanmoins être suffisamment haut pour permettre le passage du dispositif d'alimentation.

Dans le bain 27, les électrodes 25 et 26 jouant le rôle de source de chaleur, comme nous l'avons vu plus haut, donnent naissance à des courants de convection. Ces courants sont représentés par les boucles fléchées. Seule la direction générale de ces courants est représentée.

Le mouvement est ascendant le long des électrodes. Le verre chauffé longe ensuite l'interface du bain fondu et de la couche surnageante 28 puis redescend, soit le long des parois, soit dans la zone médiane du four.

Des mouvements secondaires induits d'intensité plus ou moins forte accompagnent ce mouvement principal. A titre indicatif, les flèches I indiquent la direction de ces courants induits au voisinage des courants ascendants.

La base des électrodes est protégée de l'érosion par des socles 30 en matériau réfractaire particulièrement résistant.

L'exemple de mise en œuvre suivant concerne un four de fusion électrique de verre destiné à la formation de fibres d'isolation. Le verre préparé à cet effet ne requiert pas un affinage très poussé. Dans ce type d'application, le verre sortant du four est directement acheminé vers les machines de fibrage.

Pour ce type d'application on utilise des verres dont la composition pondérale est typiquement du genre suivant :

| | | | |
|---|---|---|---|
| $SiO_2$ | 60-67 | CaO | 6-9 |
| $Al_2O_3$ | 3-5 | MgO | 0-4 |
| $Na_2O + K_2O$ | 16-20 | $B_2O_3$ | 0-5 |

Les compositions peuvent encore renfermer des quantités variables de MnO, BaO et des éléments divers en faible proportion. Elles peuvent aussi contenir du fluor dans des proportions ne dépassant pas habituellement 4 %.

Le rôle du fluor, comme il est bien connu, est de faciliter la fusion des matières vitrifiables. Contrairement à ce que l'on observe dans les fusions traditionnelles à la flamme, la présence de fluor dans les fours électriques ne pose pas de problème de pollution atmosphérique en raison des quantités très réduites d'effluents gazeux émis par ces fours.

Pour obtenir ces compositions de verre, on utilise une charge de matières premières constituée de : sable, feldspath, borax, carbonate de sodium, dolomie, calcaire, spath-fluor.

La charge est introduite sous forme intimement mélangée. Eventuellement la charge est préalablement calcinée pour en éliminer l'eau qu'elle renferme.

La fusion est conduite dans un four du type représenté à la figure 5.

La surface de la sole du four est de 48 m² (6 x 8). La profondeur du bain peut varier en fonction des conditions de marche. Elle peut atteindre 1,6 m au maximum et s'abaisser compte tenu de la longueur des électrodes jusqu'à 1,10 m.

Les électrodes de molybdène ont un diamètre de 70 mm. Elles sont au contact du bain sur une longueur de l'ordre de 800 mm. Cette longueur peut être modifiée en fonction des besoins de 200 mm en plus ou en moins.

La puissance de raccordement au réseau disponible est de l'ordre de 11000 kVA. Les pertes dans les transformateurs et les connexions réduisent la puissance utile à environ 10500 kVA. La tension délivrée sur chaque phase est réglable et peut être au maximum de 200 V.

En fonction de cette puissance disponible, la capacité de production du four s'établit au maximum à environ 220 tonnes par jour soit environ 4,5 tonnes/m² et par jour.

Pour la production la plus élevée, la température de la masse de verre fondu à la sortie du four s'établit à 1450 °C environ et la consommation spécifique est de l'ordre de 850 kWh par tonne de verre produite.

Le four peut aussi fonctionner sans difficulté à un régime ralenti qui peut être de l'ordre de 1 tonne/m² par jour ou moins.

Pour une production de 50 tonnes par jour, la température du verre à la sortie du four n'est plus que de 1250 °C. La consommation énergétique est alors de l'ordre de 950 kWh par tonne.

Les consommations en question sont obtenues avec la composition indiquée précédemment à laquelle sont ajoutés 10 % de calcin.

Ces résultats sont remarquables d'abord par le faible niveau de consommation spécifique et la faible température de travail, compte tenu des quantités fondues. L'économie d'énergie réalisée avec ce four par rapport à des fours analogues antérieurs (pour le même niveau de production) est supérieure à 6 % quel que soit le régime choisi.

Par ailleurs, le four selon l'invention permet un fonctionnement ralenti beaucoup plus faible que celui autorisé pour les fours analogues antérieurs.

Ces améliorations sont dues comme nous l'avons vu à la construction particulière de ce four. La distance entre les électrodes en particulier est de 1,9 m, ce qui correspond à un rapport :

$$nd^2/S = 12 \ (1,9)^2 \times 48 = 0,9$$

Un autre avantage des fours selon l'invention est lié au fait que pour une production équivalente, la température de travail étant moindre, l'érosion des réfractaires et des électrodes est très sensiblement diminuée. La longévité du four qui est un paramètre économique important est donc particulièrement avantageuse dans le cas de l'invention.

## Revendications

1. Four de fusion électrique pour charge vitrifiable, l'énergie de fusion étant dissipée par effet Joule dans la masse fondue, comprenant des électrodes disposées verticalement sur la sole du four et étant alimentées en courant triphasé, caractérisé en ce que les électrodes sont réparties de façon régulière sur toute la surface de la sole en au moins un ensemble ordonné comprenant deux rangées de trois électrodes équidistantes, chacune de celles-ci étant alimentée sur une des trois phases désignées R, S et T, l'ordre des phases des électrodes dans les deux rangées étant inversé (R, S, T et T, S, R) de sorte que les deux électrodes médianes sont en phase et les électrodes extrêmes sont sur des phases différentes, la distance séparant deux électrodes d'une même rangée étant à peu près égale à la distance séparant les deux rangées.

2. Four selon la revendication 1, caractérisé en ce que les électrodes sont en nombre pair de rangées de trois électrodes formant les ensembles ordonnés (R, S, T ; T, S, R) la disposition des ensembles étant telle que les électrodes de deux rangées voisines de deux ensembles voisins soient dans le même ordre (R, S, T ; R, S, T).

3. Four selon la revendication 2, caractérisé en ce que la distance entre deux rangées de deux ensembles ordonnés voisins est égale à la distance séparant les rangées du même ensemble.

4. Four selon la revendication 1, caractérisé en ce qu'il comporte trois rangées d'électrodes et en ce que l'ordre des phases des électrodes des rangées voisines est R, S, T ; T, S, R ; R, S, T.

5. Four selon l'une quelconque des revendications 1 à 4, caractérisé en ce qu'il comprend des rangées comportant un multiple de trois électrodes, l'ordre des phases des électrodes s'inversant pour chaque série de trois électrodes (R, S, T ; T, S, R ; R, S, T ; ...).

6. Four de fusion électrique pour charge vitrifiable dans lequel l'énergie de fusion est dissipée par effet Joule dans la masse fondue, comprenant des électrodes disposées verticalement sur la sole du four, les électrodes étant alimentées par un courant triphasé, caractérisé en ce que les électrodes sont réparties de façon régulière sur toute la surface de la sole S, la distance d la plus petite séparant les électrodes échangeant étant telle que $nd^2/S$ soit compris entre 0,4 et 1,4, n étant le nombre d'électrodes (ou de groupes d'électrodes).

7. Four selon la revendication 6, caractérisé en ce que le rapport $nd^2/S$ est compris entre 0,6 et 1,25.

8. Four selon l'une quelconque des revendications précédentes, caractérisé en ce que la production minimum en régime ralenti est inférieure au sixième de la production maximum.

9. Four selon l'une quelconque des revendications précédentes, caractérisé en ce que les électrodes sont remplacées par des groupes d'électrodes identiques cylindriques, l'entraxe de deux électrodes voisines d'un même groupe étant au moins égal à deux diamètres de l'électrode et au plus égal à huit fois ce diamètre.

**Claims**

1. Electric melting furnace for a vitrifiable charge, the fusion energy being dissipated into the molten mass by Joule's effect, the furnace comprising electrodes disposed vertically over the hearth of the furnace and being supplied with three-phase current, characterised in that the electrodes are distributed evenly over the entire surface of the hearth in at least one orderly assembly comprising two rows of three equidistant electrodes, each of these latter being fed on one of the three phases designated R, S and T, the order of the phases of the electrodes in the two rows being reversed (R, S, T and T, S, R) so that the two middle electrodes are in phase while the end electrodes are of different phases, the distance separating two electrodes in one and the same row being nearly equal the distance separating the two rows.

2. Furnace according to Claim 1, characterised in that the electrodes are in an even number of rows of three electrodes forming the orderly assemblies (R, S, T ; T, S, R), the disposition of the assemblies being such that the electrodes in two neighbouring rows of two neighbouring assemblies are in the same order (R, S, T ; R, S, T).

3. Furnace according to Claim 2, characterised in that the distance between two rows of two neighbouring ordered assemblies is equal to the distance separating the rows of the same assembly.

4. Furnace according to Claim 1, characterised in that it comprises three rows of electrodes and in that the order of phases of the electrodes in neighbouring rows is R, S, T ; T, S, R ; R, S, T.

5. Furnace according to any one of Claims 1 to 4, characterised in that it comprises rows comprising a multiple of three electrodes, the order of the phases of the electrodes being reversed for each series of three electrodes (R, S, T ; T, S, R ; R, S, T ; ...).

6. Electric smelting furnace for a vitrifiable charge, the fusion energy being dissipated into the molten mass by Joule's effect, the furnace comprising electrodes disposed vertically over the hearth of the furnace and being supplied with three-phase current, characterised in that the electrodes are distributed evenly over the entire surface of the hearth S, the smallest distance d separating the exchanging electrodes being such that $nd^2/S$ is comprised between 0.4 and 1.4, n being the number of electrodes (or groups of electrodes.

7. Furnace according to Claim 6, characterised in that the ratio $nd^2/S$ is comprised between 0.6 and 1.25.

8. Furnace according to any one of the preceding Claims, characterised in that the minimum production under conditions of slow operation is less than one-sixth the maximum production.

9. Furnace according to any one of the preceding Claims, characterised in that the electrodes are replaced by groups of identical cylindrical electrodes, the distance between centres of two neighbouring electrodes in one and the same group being at least equal to twice the diameter of the electrode and at most equal to eight times this diameter.

**Patentansprüche**

1. Elektrischer Schmelzofen für verglasbare Beschickung, bei dem die Schmelzenergie in der geschmolzenen Masse durch Stromwärme bereitgestellt wird, mit auf der Ofensohle verteilt angeordneten, vertikal stehenden drehstromgespeisten Elektroden, dadurch gekennzeichnet, daß die Elektroden über die gesamte Sohlenfläche in mindestens einer geordneten Menge aus zwei Reihen von drei gleichabständigen Elektroden verteilt sind, daß jede Elektrode an eine der drei Phasen R, S und T angeschlossen ist, wobei die Reihenfolge der Phasen der Elektroden in den beiden Reihen entgegengesetzt ist (R, S, T und T, S, R), so daß die beiden mittleren Elektroden gleichphasig sind und die Außenelektroden an unterschiedlichen Phasen liegen, und daß der Abstand zwischen zwei Elektroden in der gleichen Reihe etwa gleich dem Abstand zwischen den beiden Reihen ist.

2. Schmelzofen nach Anspruch 1, dadurch gekennzeichnet, daß die Elektroden in einer geradzahligen Anzahl Reihen zu jeweils drei Elektroden angeordnet sind, um die geordneten Mengen (R, S, T ; T, S, R) zu bilden, und daß die Mengen so zusammengestellt sind, daß die Elektroden von zwei benachbarten Reihen zweier benachbarter Mengen in der gleichen Reihenfolge (R, S, T ; R, S, T) angeordnet sind.

3. Schmelzofen nach Anspruch 2, dadurch gekennzeichnet, daß der Abstand zwischen zwei Reihen zweier benachbarter geordneter Mengen gleich dem Abstand zwischen den Reihen der gleichen Menge ist.

4. Schmelzofen nach Anspruch 1, dadurch gekennzeichnet, daß drei Reihen Elektroden vorgesehen sind, und daß die Reihenfolge der Phasen der Elektroden der benachbarten Reihen R, S, T ; T, S, R ; R, S, T ist.

5. Schmelzofen nach einem der Ansprüche 1 bis 4, dadurch gekennzeichnet, daß Reihen mit einem Vielfachen von drei Elektroden vorgesehen sind, wobei die Reihenfolge der Phasen der Elektroden sich für jede Folge von drei Elektroden umkehrt (R, S, T ; T, S, R ; R, S, T ; ...).

6. Elektrischer Schmelzofen für verglasbare Beschickung, bei dem die Schmelzenergie in der geschmolzenen Masse durch Stromwärme bereitgestellt wird, mit auf der Ofensohle verteilt angeordneten, vertikal stehenden drehstromgespeisten Elektroden, dadurch gekennzeichnet, daß die Elektroden gleichmäßig über die gesamte Fläche der Sohle (S) verteilt sind, und daß der kleinste Abstand (d) der die wechselnden Elektroden trennt, so groß ist, daß $nd^2/S$ zwischen 0,4 und 1,4 liegt, wobei n die Zahl der Elektroden (oder der Gruppen von Elektroden) ist.

7. Schmelzofen nach Anspruch 4, dadurch ge-

kennzeichnet, daß das Verhältnis $nd^2/S$ zwischen 0,6 und 1,25 liegt.

8. Schmelzofen nach einem der vorhergehenden Ansprüche, dadurch gekennzeichnet, daß die Mindestproduktion bei eingeschränktem Betrieb weniger als ein Sechstel der Höchstproduktion beträgt.

9. Schmelzofen nach einem der vorhergehenden Ansprüche, dadurch gekennzeichnet, daß die Elektroden durch Gruppen von genau gleichen zylindrischen Elektroden ersetzt sind, und daß der Mittenabstand zwischen zwei benachbarten Elektroden der gleichen Gruppe mindestens gleich dem zweifachen und höchstens gleich dem achtfachen Elektrodendurchmesser ist.

FIG.1a

FIG.1b

FIG.2

FIG.4

## FIG.3a  FIG.3b  FIG.3c

## FIG.3d  FIG.3e

## FIG.5